# FASCICULE DE BREVET EUROPEEN

(11) **EP 2 503 135 B1**
(45) Date de publication et mention de la délivrance du brevet: **16.03.2016**
(21) Numéro de dépôt: 12161049.7
(22) Date de dépôt: 23.03.2012
(51) Int. Cl.: F02K 9/12, F02K 9/28, F02K 9/34, F02K 9/18

(54) **Générateurs de poussée bi-impulsions et multi-impulsions**
Doppelimpuls- und Mehrfachimpuls-Schubgenerator
Dual-pulse and multi-pulse thrust generators

(30) Priorité: 23.03.2011 FR 1152408
(43) Date de publication de la demande: 26.09.2012
(73) Titulaire: ROXEL France, 33167 Saint-Medard en Jalles Cedex (FR)
(72) Inventeur: Nugeyre, Jean-Claude, 33127 Saint Jean d'Illac (FR); Zanelli, Didier, 45100 ORLEANS (FR)
(74) Mandataire: Collet, Alain

(56) Documents cités:
- US-A- 3 857 239
- US-A- 5 675 966

## Description

L'invention concerne le domaine général des propulseurs à propergol solide. Elle concerne plus particulièrement les propulseurs mono-chambre et mono-tuyère.

Pour satisfaire les exigences de déplacement imposées par certaines missions opérationnelles mettant en oeuvre des engins propulsés par un générateur de poussée à propergol solide, des engins balistiques de type fusée notamment, il est particulièrement avantageux de disposer de moyens de propulsion pouvant adopter au cours du temps des régimes de poussée variables. Le rapport de poussée étant fonction des performances recherchées en termes de portée et de vélocité, la poussée à délivrer pour deux régimes successifs peut varier de manière significative. Le rapport de poussée peut ainsi, par exemple, prendre une valeur comprise entre 10 et 20 ou même excéder ces valeurs.

Par ailleurs, il est parfois nécessaire, toujours pour des raisons opérationnelles, de moduler la poussée délivrée de façon à optimiser la consommation d'énergie le long de la trajectoire.

Cependant, une telle optimisation nécessite de mettre en oeuvre des lois de poussée généralement complexes.

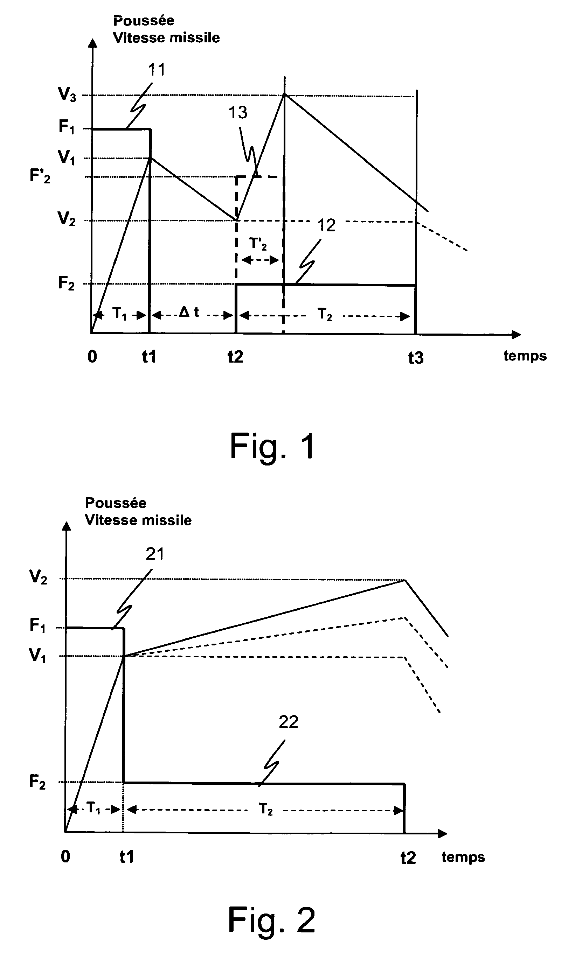

Ainsi, par exemple, on peut chercher à définir une loi de poussée, illustrée par la figure 1, consistant à appliquer une première poussée 11, ou "boost" selon la dénomination anglo-saxonne, pendant une durée T1, puis à cesser toute poussée pendant une durée ΔT, puis enfin à appliquer une seconde poussée 12 ou 13, ou second "boost", pendant une durée T2 (ou T'2).

L'application d'une telle loi de poussée permet à l'engin considéré d'atteindre rapidement une vitesse maximale V₁ (instant t₁) puis de rallier une vitesse donnée V₂ (instant t₂) et, soit de s'y maintenir sans la dépasser, soit d'atteindre une vitesse donnée V₃ à son arrivée en un point d'arrivée donné (instant t₃).

Plus simplement, on peut chercher à définir une autre loi de poussée, illustrée par la figure 2, connue de l'homme du métier sous l'appellation anglo-saxonne de loi "boost & sustain", consistant à appliquer deux régimes de poussée (lois bi-régime) consécutifs, une première poussée 21, ou "boost", pendant une durée T1, puis à appliquer une seconde poussée 22, ou poussée de maintien, pendant une durée T2.

L'application d'une telle loi de poussée permet avantageusement à l'engin considéré d'accélérer en permanence de façon à atteindre une vitesse maximale V₂ en un point d'arrivée (instant t₂) en accélérant fortement jusqu'à une vitesse V₁ pendant un premier intervalle de temps (T₁) puis en maintenant une accélération plus faible pendant un second intervalle de temps (T₂).

Pour mettre en oeuvre des lois de poussée telles que celles illustrées par la figure 1, on utilise des propulseurs spécifiques, appelés propulseurs à bi-impulsions, ou "bipulses" selon la dénomination anglo-saxonne, ou, plus généralement, propulseurs multi-impulsions ou "multipulses" selon cette même dénomination anglo-saxonne. De tels propulseurs sont configurés pour délivrer des poussées successives éventuellement séparées dans le temps par des intervalles de temps Δt durant lesquels aucune poussée n'est délivrée.

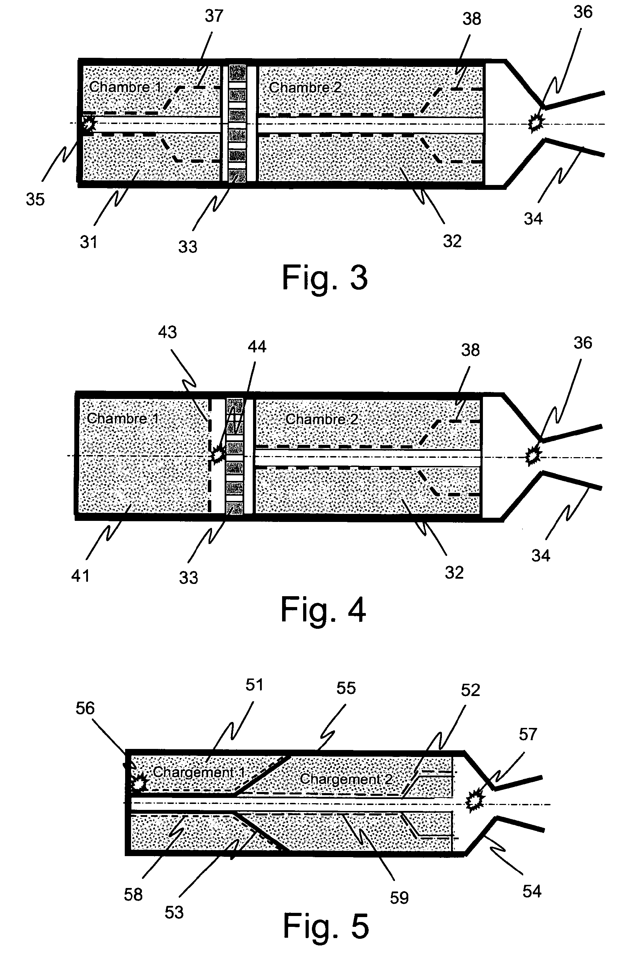

Pour réaliser un propulseur bipulses ou multipulses, on est contraint, en l'état de l'art actuel, de concevoir comme l'illustre la figure 3, des systèmes comportant différents chargements de propergol 31, 32, disposés dans des chambres de combustion juxtaposées, séparées les une des autres par des cloisons intermédiaires 33 permettant de réaliser des combustions séparées des différents chargements installés dans le propulseur; les différentes chambres partageant une même tuyère d'éjection des gaz de combustion 34 comme sur l'illustration de la figure 3. Une telle architecture, encore envisageable pour réaliser des propulseurs de type bipulses est en revanche difficile à mettre en oeuvre s'agissant de réaliser un propulseur multipulses. En effet la construction d'un tel propulseur nécessite de réaliser pour chaque chambre la mise en place du chargement de propergol correspondant et de la cloison de séparation avec la chambre suivante, en prenant soin lors de la mise en place d'un chargement de ne pas affecter les chambres déjà chargées de propergol. Par ailleurs en l'état de l'art actuel, la réalisation de propulseurs bipulses permettant d'appliquer des régimes de poussée comportant des séquences de poussée d'intensités comparables est souvent difficile à réalise. En effet pour des raisons diverses, tenant notamment au fait que la seconde poussée appliquée est généralement destinée à durer moins longtemps que la première, les deux chambres de combustion présentent des volumes distincts. Or, la quantité de propergol embarquée dans une chambre et la surface offerte à la combustion conditionnent à la fois la durée de la poussée appliquée mais aussi son intensité. Ainsi, quelle que soit la forme géométrique adoptée par le propergol, celui-ci offre une surface de combustion d'autant plus faible de que le volume de la chambre est plus faible. Par suite, dans les propulseurs actuels, comportant deux chambres de combustion distinctes séparées par une cloison rigide, la chambre avant (i.e. la plus éloignée de la tuyère) responsable de la deuxième poussée, produit très généralement, pour une même nature de propergol une poussée d'intensité très sensiblement moindre que celle produite par la chambre arrière. C'est pourquoi, lorsque l'on souhaite obtenir deux poussées d'intensités comparables, voire sensiblement identiques, on est généralement contraint de prévoir des propergols distincts pour les deux chambres, la chambre avant comportant un propergol à vitesse de combustion plus élevée que la chambre arrière. Ceci complexifie l'opération de chargement du propulseur et rend la réalisation d'un tel propulseur plus onéreuse. Les documents US5675966 et US3857239 divulguent des générateurs de poussée selon l'état de l'art.

C'est pourquoi, actuellement, on se limite généralement à la réalisation de propulseurs bipulses. Néanmoins le besoin de générateurs de poussée multipulses de structure simple et moins onéreuse se fait actuellement sentir.

Un but de l'invention est de proposer un générateur de poussée permettant de réaliser de manière simple des lois de poussée enchainant plusieurs régimes de poussée espacés dans le temps, chaque régime correspondant à une poussée d'intensité et de durée données. Un autre but de l'invention est de proposer une structure générique permettant de réaliser, de manière simple des lois de poussée enchainant plusieurs régimes de poussée correspondant à des poussées d'intensités comparables.

A cet effet l'invention a pour objet un générateur de poussée à propergol solide selon les revendications adjointes.

L'invention a également pour objet un procédé pour réaliser un générateur de poussée selon la revendication 13.

Avantageusement le générateur de poussée selon l'invention permet de réaliser de manière simple des régimes de poussée variables, bipulses ou même multipulses, capables d'enchainer des poussées d'intensités et de durées variables, ces poussées successives pouvant être consécutives ou séparées les unes des autre par des intervalles de temps déterminés.

Les caractéristiques et avantages de l'invention seront mieux appréciés grâce à la description qui suit, description qui s'appuie sur les figures annexées qui représentent:
- les figures1 et 2, des chronogrammes présentant des profils de poussée types;
- les figures 3 à 5, des exemples de structures connues permettant de réaliser un générateur de poussée bipulses;
- les figures 6 et 7, des représentations schématiques en coupe longitudinale illustrant la structure générale et le principe de fonctionnement du générateur de poussée selon l'invention;
- la figure 8, un chronogramme schématique présentant l'allure et l'agencement temporel des poussées successives exercées par la structure générale des figures 6 et 7;
- les figures 9 et 10, des illustrations schématiques en coupe de la structure et du principe de fonctionnement d'une variante de réalisation de la structure générale illustrée par les figures 6 et 7;
- la figure 11, un chronogramme schématique présentant l'allure et l'agencement temporel des poussées successives exercées par la variante de réalisation des figures 9 et 10 dans le régime de poussée particulier pouvant être adopté par cette variante;
- la figure 12, une représentation schématique en coupe longitudinale illustrant la structure d'une application de la structure générale à la réalisation d'un générateur de poussée multipulses;
- les figures 13 et 14, des chronogrammes schématiques présentant l'allure et l'agencement temporel des poussées successives exercées par la structure illustrée par la figure 12, dans les deux régimes de poussée pouvant être adoptés par cette structure;
- la figure 15, une représentation schématique en coupe longitudinale illustrant la structure d'une autre application de la structure générale à la réalisation d'un générateur de poussée multipulses;
- les figures 16 et 17, des chronogrammes schématiques présentant l'allure et l'agencement temporel des poussées successives exercées par la structure illustrée par la figure 15, dans les deux régimes de poussée pouvant être adoptés par cette structure.

On considère dans un premier temps les figures 3 à 5 qui permettent de mettre en évidence les problèmes de mise en oeuvre liés aux structures existantes communément utilisées.

La structure illustrée par les figures 3 et 4, permet de délivrer deux échelons de poussée prédéfinis par une tuyère unique 34. Cette structure comporte deux chambres de combustion 31 (41) et 32 séparées par une cloison intermédiaire 33 rigide et perforé, obturé par une paroi (feuillard métallique mince ou membrane flexible renforcée). La structure présentée comporte également deux allumeurs distincts 35 (44) et 36 agencés et commandés de façon à initier à l'instant désiré la combustion du matériau énergétique, du propergol, contenu dans la chambre de combustion, la combustion se produisant ainsi en surface. Sur les figures 3 et 4, ces surfaces de combustion sont matérialisées par les traits pointillés 37 (43) et 38.

Une telle structure permet de réaliser différentes séquences de poussée qui peuvent cependant être groupées en deux types de profils :
- un profil accélération-accélération obtenu, par exemple en chargeant les deux chambres avec des chargements de forme « finocyle », connue de l'homme du métier, comme illustré par la figure 3.
- un profil accélération-croisière obtenu, par exemple en chargeant la chambre de combustion principale 32 avec un chargement de forme finocyle et la chambre de combustion secondaire 41 avec un chargement de forme cigarette

Ce type de structure permet ainsi, en modifiant les géométries des chargements de deux chambres et en utilisant éventuellement des propergols ayant des vitesses de combustion différentes de concevoir un propulseur délivrant deux créneaux de poussée présentant un profil, soit de type accélération-accélération tel que celui illustré par les impulsions 11 et 13 sur la figure 1, soit de type accélération-croisière tel que celui illustré par les impulsions 11 et 12 sur la figure 1. Par ailleurs, en agissant sur l'intervalle de temps Δt, on peut obtenir que les deux phases de poussée soient délivrées en des instants déterminés séparés dans le temps ou encore, comme illustré par la figure 2, qu'elles soient délivrées consécutivement, Δt étant alors choisi comme étant voisin de zéro.

Cependant la réalisation d'une telle structure s'avère relativement complexe et onéreuse, surtout si pour des raisons opérationnelles on souhaite que les deux phases de poussée aient des intensités, sinon identiques, du moins voisines. En effet, dans ce cas, la chambre de combustion secondaire 31, 41 délivrant la seconde poussée présentant une surface de combustion de dimensions généralement plus faibles que celle de la chambre principale 32 délivrant la première poussée, il est nécessaire de remplir cette chambre avec un propergol à vitesse de combustion plus élevée que celui de la chambre principale 32. Néanmoins, outre le fait que de telles dispositions ne résolvent que partiellement le problème, cette hétérogénéité des chargements contribue, de manière connue, à complexifier la réalisation du propulseur.

Une solution connue pour diminuer le coût de fabrication d'un propulseur capable de délivrer deux poussées successives est illustrée par la figure 5. Elle consiste à réaliser un propulseur comportant une chambre de combustion unique à l'intérieur de laquelle sont installés deux chargements de propergol 51 et 52 séparés l'un de l'autre par une cloison flexible 53 constituée par un matériau inhibiteur de combustion. Chacune des zones délimitées par la cloison flexible comporte par ailleurs un allumeur dédié 57 et 56.

Dans une telle structure, les chargements correspondant aux deux poussées sont isolés l'un de l'autres par une membrane flexible 53 s'appuyant sur le chargement 51 de la seconde impulsion de poussée (pulse 2) et collée à ce chargement au moins. La membrane flexible 53 est ici une membrane décollée des pulses un et deux, configurée pour servir d'inhibiteur de combustion vis-à-vis du second chargement de propergol 51 durant la combustion du premier chargement.

On obtient ainsi un propulseur de structure simple pouvant délivrer deux poussées successives 11 et 13 séparées par un intervalle de temps Δt défini, telles que celles illustrées par la figure 1. Néanmoins, une telle structure ne permet pas non plus de réaliser aisément un propulseur capable de délivrer deux poussées sensiblement de même intensité, du fait en particulier que les surfaces de combustion des deux chargements, matérialisées respectivement par les lignes pointillées 58 et 59 sur la figure 5, ne sont pas de même taille. Par suite sauf à employer un propergol plus énergétique ou à vitesse de combustion plus élevée pour le chargement 51, l'intensité de la seconde poussée 13 reste sensiblement inférieure à celle de la première poussée 11.

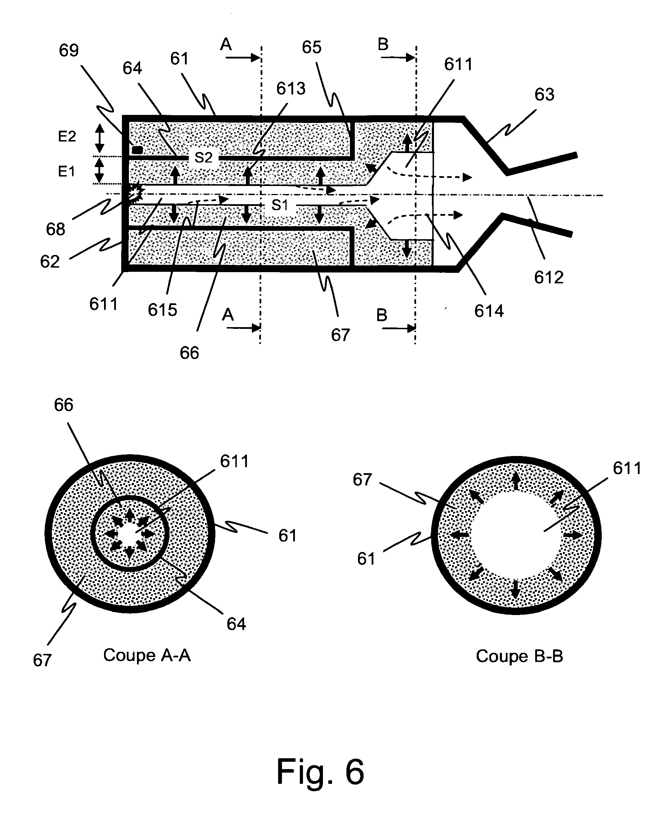

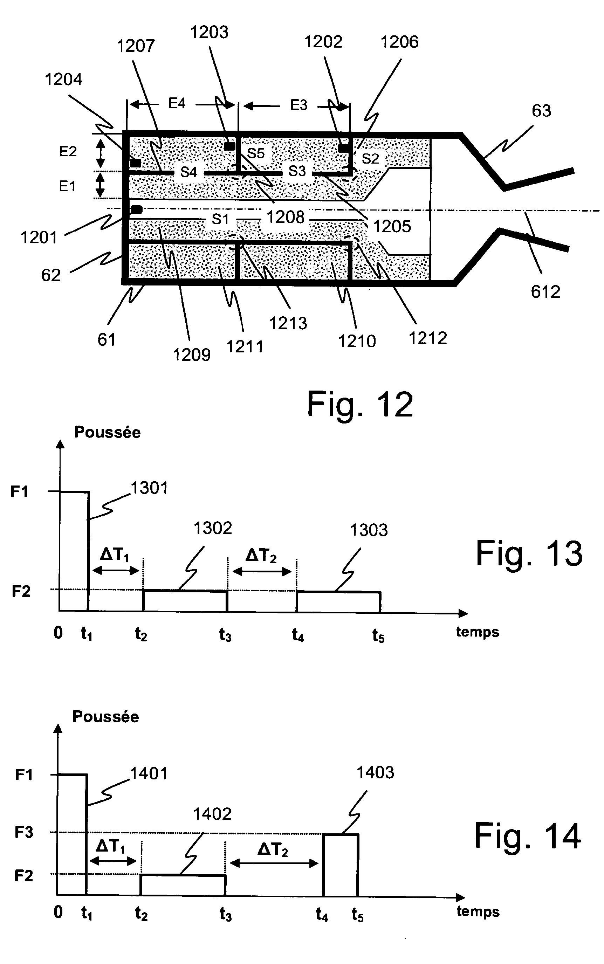

Les figures 6 à 8 présentent de manière schématique la structure type et le principe de fonctionnement d'un générateur de poussée, ou propulseur, selon l'invention. La structure présentée est ici celle d'une générateur de poussée bipulses. Celle-ci peut cependant aisément être généralisée aux générateurs de poussé multipulses comme illustré par les figures 12 à 14 ou 15à17.

Du point de vue structurel, le générateur de poussée selon l'invention comporte principalement une structure formant un corps de propulseur dans lequel sont moulés des chargements de propergol.

Le corps de propulseur de forme globalement cylindrique présente une paroi latérale 61 une extrémité fermée 62 et une extrémité libre terminée typiquement par une tuyère 63. Il peut être fabriqué dans différents matériaux, par exemple en matériau composite (carbone, kevlar®), en matériau hybride (aluminium-kevlar® ou acier-carbone), ou encore en métal, en acier notamment.

La tuyère 63 est une tuyère, généralement métallique avec un col unique adapté à un fonctionnement bipulses ou plus généralement à un fonctionnement multipulses.

Le propergol contenu dans le générateur de gaz bipulse selon l'invention est un propergol solide, un propergol: composite à fumées réduites par exemple ou encore un propergol de type XLDB, ou " Cross Linked Double Base propellant" selon la terminologie anglo-saxonne, contenant un taux réduit de perchlorate d'ammonium (ou PA). Il est moulé en deux chargements 66 et 67 séparés par une cloison souple, comportant une partie cylindrique 64 et une partie annulaire 65 solidaires l'une de l'autre, dont le rôle est d'arrêter la combustion lorsqu'elle est atteinte par le front de combustion du premier chargement 66 et d'empêcher ainsi la combustion du second chargement 67. La cloison séparatrice 64-65 peut être réalisée en matériau élastomère, de l'EPDM (éthylène-propylène-diène monomère) renforcé ou du silicone renforcé par exemple, le renfort pouvant par exemple être constitué de tissu Rowing ou de tout autre élément constituant pouvant renforcer la tenue mécanique de la cloison dans les gaz de combustion.

D'un point de vue morphologique, la cloison souple 64-65 est configurée de façon à ce que la surface de contact entre les deux chargements 66 ou 67 présente une symétrie axiale et que les deux chargements présentent des surfaces de combustion S1 et S2 de tailles sensiblement égales ou du moins comparables, les surface S1 et S2 étant par ailleurs de préférence définies de façon à ce que les régimes de combustion des différents chargements soient compatibles d'un fonctionnement avec une seule et même tuyère 63. Les vues en coupe A-A, B-B et C-C donnent un aperçu en coupe des surfaces de combustion du premier chargement (coupes A-A et B-B) et du second chargement (coupe C-C). Ces deux surfaces présentent une symétrie axiale par rapport à l'axe 612 du corps de propulseur.

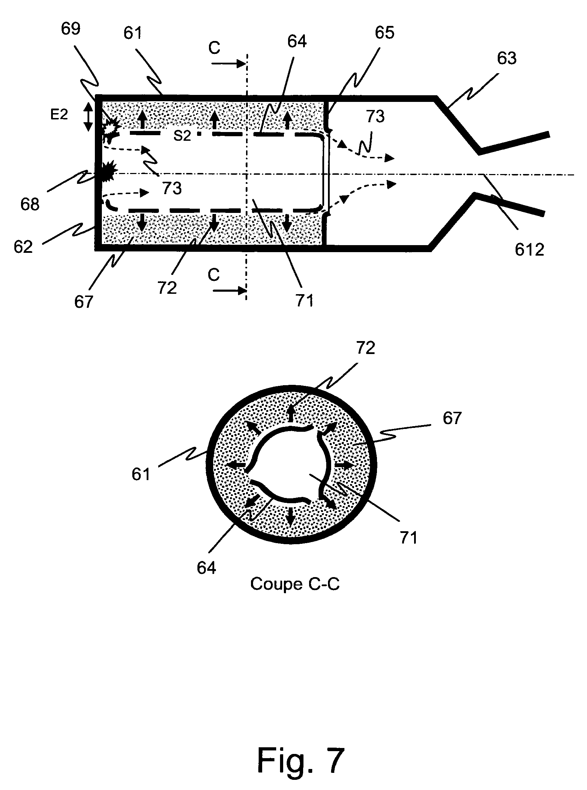

Afin d'initier successivement les combustions des deux chargements 66 et 67, le générateur de poussée bipulses selon l'invention comporte par ailleurs deux allumeurs indépendants 68 et 69 agencés de manière appropriée au contact de l'un ou l'autre chargement, comme illustré sur les figures 6 et 7. Ces allumeurs sont par exemple des allumeurs bi-fonction de type micro-roquette ou tout autre moyen équivalent connu permettant de réaliser deux allumages séquentiels.

D'un point de vue fonctionnel, le régime de fonctionnement du générateur de poussée bipulses selon l'invention comporte deux phases de combustion séparées d'un intervalle de temps sans combustion.

La première phase de combustion concerne généralement le chargement 66 le plus externe, dont la surface de combustion est ouverte sur l'orifice d'évacuation des gaz de combustion. Elle est initiée par l'activation d'un premier allumeur 68, un allumeur de type connu par exemple. Cette initiation entraine la combustion du premier chargement 66 par la surface S1, combustion matérialisée par les flèches 613 sur la figure 6. La surface S1 délimite un canal central 611 par lequel les gaz de combustion, matérialisés par les flèches 614 et 615 sur la figure 6, sont évacués et accélérés par la tuyère 63 de façon à délivrer l'effort de poussée optimal.

Cette première phase de combustion se termine lorsque le premier chargement est complètement brulé, la poursuite de la combustion étant alors inhibée par la présence de la cloison souple 64-65 qui prévient l'allumage du second chargement 67.

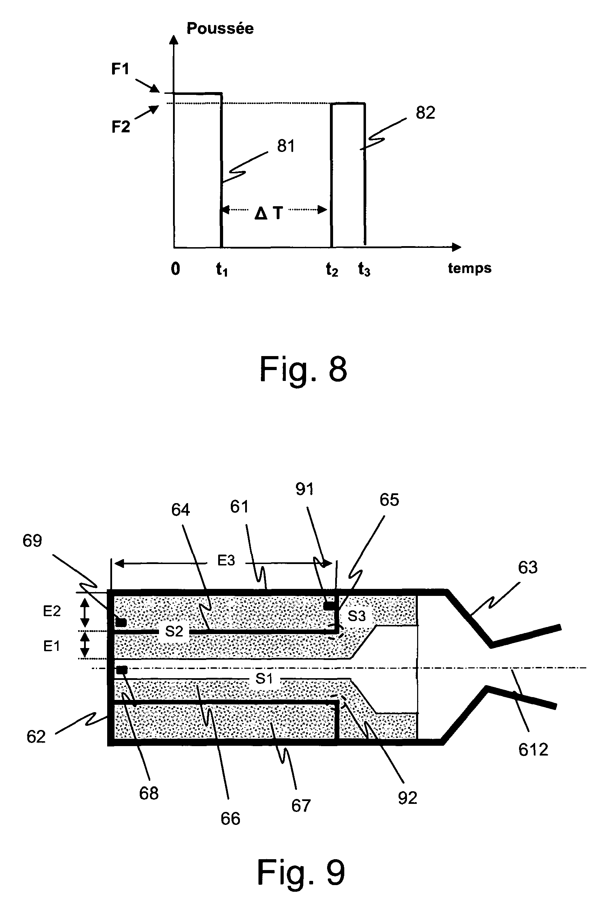

La combustion du premier chargement 66 produit, comme illustré par la figure 8, une première poussée 81 d'intensité F1 sensiblement constante, dont la durée t₁ correspond à la durée de combustion de ce chargement.

La seconde phase de combustion démarre quant à elle après un intervalle de temps ΔT donné correspondant à la cinématique désirée pour l'engin utilisant le générateur de poussée. Elle est initiée par l'activation d'un second allumeur 69, un allumeur de type connu par exemple, positionné derrière la cloison souple 64-65 de façon à être en contact avec le second chargement 67.

Le second allumeur 69 est en outre agencé de telle façon que son activation entraine la combustion du second chargement et que la pression des gaz de combustion soit rapidement suffisante pour entrainer le pelage maîtrisé de la cloison dans sa partie tubulaire 64, à l'interface avec le propergol formant le second chargement 67 et la déchirure de la cloison, déchirure qui libère ainsi les gaz de combustion dans le canal central 71 laissé libre par la combustion du premier chargement 66. Cette initiation entraine la combustion du second chargement 67 par la surface S2, combustion matérialisée par les flèches 72 sur la figure 7. Les gaz de combustion, matérialisés par les flèches pointillées 73 sur la figure 7, sont ainsi évacués et propulsés ver la tuyère 63 par le canal central 71.

La combustion du second chargement 67 produit, comme illustré par la figure 8, une seconde poussée 82 d'intensité F2 sensiblement constante, dont la durée t₃-t₂ correspond à la durée de combustion de ce chargement.

Il est à noter que, les modes de combustion des deux chargements 66 et 67 étant identiques (combustions suivant deux surfaces coaxiales présentant le même axe de symétrie) l'architecture selon l'invention permet avantageusement, en jouant sur les volumes des deux chargements et en actionnant successivement les deux allumeurs 68 et 69 suivant une séquence déterminée, de réaliser de manière simple un générateur de poussée bipulses capable de produire deux poussées successives 81 et 82, séparées par un intervalle de temps déterminé ΔT et ayant des intensités F1 et F2 comparables, et ce, en utilisant un même propergol pour les deux chargements.

D'un point de vue réalisation, le générateur de poussée selon l'invention fait appel à des techniques connues de l'homme du métier. A ce titre plusieurs procédés de réalisation sont possibles. Ainsi, dans une forme de réalisation préférée, on met en oeuvre un procédé comportant principalement les opérations suivantes :
- une opération préliminaire consistant à préparer de la structure interne du corps de propulseur en déposant des matériaux d'aménagement interne (M.A.I.) nécessaires à la mise en place d'un chargement moulé et au collage de ce chargement. Ces matériaux d'aménagement sont principalement des matériaux élastomères de protection thermique (inhibiteurs de combustion) tel que les EPDM (éthylène-propylène-diène monomères) ainsi que des matériaux lieurs tel que le polybutadiène hydroxytéléchélique, ou PBHT favorisant l'adhérence du propergol sur les parois du corps de propulseur.
- une première opération consistant à couler dans le corps de propulseur, équipé principalement d'un premier noyau de moulage, le propergol formant le second chargement 67, à réaliser la cuisson du propergol puis l'extraction du noyau (démoulage); le premier noyau de moulage donnant sa forme au canal 71 du second chargement;
- une deuxième opération consistant à mettre en place sur le propergol constituant le second chargement 67 la barrière élastomérique formant la paroi souple 64-65, préalablement préparée;
- une troisième opération consistant à couler, dans le corps de propulseur contenant déjà le premier chargement revêtu de la paroi souple et équipé de d'un second noyau de moulage, le propergol formant le premier chargement 67 (propergol identique à celui du second chargement), à réaliser la cuisson du propergol puis l'extraction du noyau (démoulage); le second noyau de moulage donnant la forme géométrique voulue au canal 611 du premier chargement.

Il est à noter que de manière alternative la première opérations peut consister à couler le chargement dans le corps de propulseur équipé d'un noyau préalablement recouvert d'une membrane souple destinée à constituer la partie cylindrique 64 de la paroi souple 64-65. De cette façon, la deuxième opération consiste simplement à mettre en place la partie annulaire 65 et à assurer la jonction des deux éléments 64 et 65.

De manière alternative également, le générateur de poussée selon l'invention peut être réalisé en mettant en oeuvre des techniques d'assemblage par soudure sur propergol, pour réaliser l'assemblage de la structure contenant le second chargement de propergol 67 (seconde poussée) avec l'élément de structure complémentaire qui sert à la réalisation du premier chargement 66 (première poussée). Cette solution connue, utilisée pour la réalisation de propulseur monopulse est par ailleurs utilisable pour la réalisation de propulseurs bipulses des figures 3 à 5. Elle permet en particulier de simplifier la mise en place de la barrière élastomérique pelable constituant la paroi souple 64-65.

En pratique, la structure décrite précédemment peut être mise en oeuvre de diverses façons pour réaliser différent types de générateurs de poussée bi ou multipulses présentant des régimes de poussée divers.

Il est ainsi possible de réaliser une application immédiate de la structure selon l'invention décrite précédemment pour réaliser un générateur de poussée bipulses capable de produire deux régimes de poussée successifs.

Il est également possible d'enrichir cette structure de façons à réaliser des générateurs de poussée capable de produire des régimes de poussée plus variés comme l'illustre les exemples d'application qui suivent.

Les figures 9 à 11 illustrent une application correspondant à une variante de réalisation de la structure générale du générateur de poussée bipulses selon l'invention décrite précédemment. Dans cette application le générateur de poussée comporte un dispositif d'initiation supplémentaire (un allumeur) 91 agencé de façon à initier une combustion du second chargement 67 par une surface de combustion annulaire S3. Ce régime de combustion permet de produire une seconde poussée d'intensité F2 plus faible que l'intensité F1 de la première poussée, dont la durée est plus longue que celle de cette dernière.

Ainsi, la présence au contact du second chargement de deux allumeurs 69 et 91 agencés de manière appropriée, comme illustré par la figure 9, permet de réaliser la combustion du second indifféremment par la surface S1 ou par la surface S3, la combustion du premier chargement restant, quant à elle, toujours réalisée par la surface S1.

Par suite, dans cette forme de réalisation particulière, le générateur de poussée selon l'invention peut avantageusement adopter deux modes de fonctionnement distincts suivant que l'on utilise tel ou tel allumeur pour initier la combustion du second chargement :
- un premier mode de fonctionnement, déjà décrit précédemment et illustré par les figures 7 et 8, qui consiste à initier la combustion du premier chargement au moyen de l'allumeur 68 de façon à produire une première poussée 81 de durée t₁, puis, après un intervalle de temps donné ΔT, à initier la combustion du second chargement au moyen de l'allumeur 69 de façon à produire une seconde poussée 82 de durée t₃-t₂, dont la durée et l'intensité sont comparables, voire identiques, à celles de la première poussée. Dans ce mode de fonctionnement l'allumeur 91 n'est alors pas mis en service.

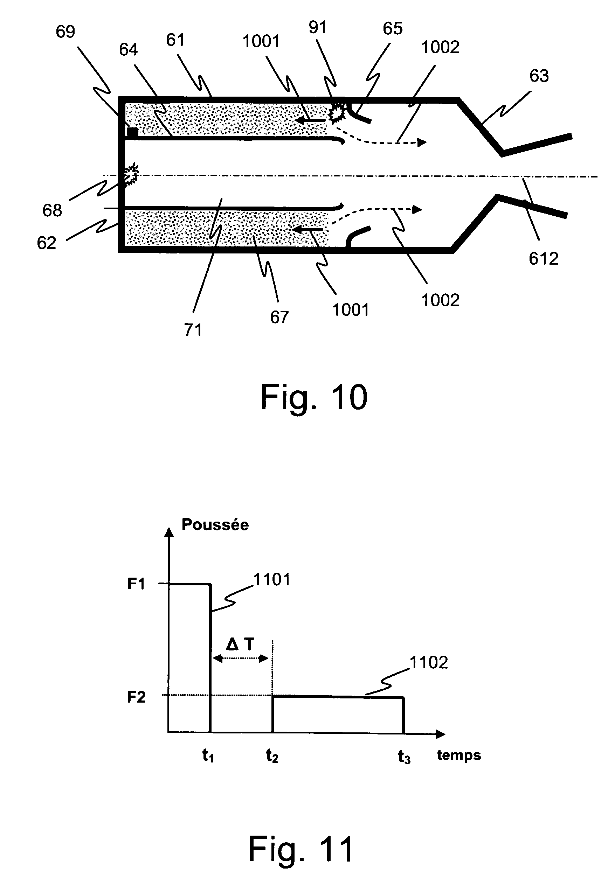

Ce premier mode de fonctionnement permet par exemple d'utiliser le générateur de poussée pour propulser un engin suivant une trajectoire comportant deux phases durant lesquelles l'engin subit des accélérations importantes qui favorise une grande manoeuvrabilité.
- un second mode de fonctionnement, illustré par les figures 10 et 11, qui consiste à initier la combustion du premier chargement au moyen de l'allumeur 68 de façon à produire, comme l'illustre la figure 11, une première poussée 1101 de durée t₁, puis, après un intervalle de temps donné ΔT, à initier la combustion du second chargement, par la surface S3, au moyen de l'allumeur 91, comme l'illustrent les flèches 1001 sur la figure 10. Cette combustion produit une seconde poussée 1102 de durée t₃-t₂, dont l'intensité est plus faible, compte tenu de la surface de combustion du second chargement, que celle de la première poussée, mais dont la durée est plus importante. Dans ce mode de fonctionnement l'allumeur 69 n'est alors pas mis en service.

Ce second mode de fonctionnement permet par exemples d'utiliser le générateur de poussée pour propulser un engin suivant une trajectoire comportant une phase d'accélération forte permettant de conférer une vitesse et une altitude de vol données puis une phase durant lesquelles l'engin subit une accélérations plus modérée mais toutefois suffisante pour maintenir l'engin à l'altitude et à la vitesse désirées jusqu'à sa destination.

Il est à noter que dans ce mode particulier de réalisation, la cloison souple 64-65 est configurée de façon à ce que lorsque c'est l'allumeur 91 qui est utilisé, l'initiation de la combustion du second chargement entraine le pelage de la cloison dans sa partie tubulaire 64, à l'interface avec le propergol formant le second chargement 67 et la déchirure de la cloison limitée à la zone de jonction entre la portion tubulaire 64 et la portion annulaire 65 de la cloison de sorte que la portion annulaire 65 s'écarte pour permettre, comme l'illustre les flèches pointillées 1002 de la figure 10, l'évacuation des gaz de combustion vers la tuyère 63, tandis que la portion tubulaire 64 reste en place (sans peler) sur le chargement de façon notamment à inhiber toute combustion du second chargement par la surface S2.

Les figures 12 à 14 illustrent un exemple d'application correspondant à une structure directement dérivée de la structure générale du générateur de poussée bipulses selon l'invention décrite précédemment. Dans cette application le générateur de poussée est un générateur tripulses dont la structure peut aisément être généralisée pour réaliser un générateur de poussée multipulses.

Dans cet exemple de réalisation le générateur de poussée comporte trois chargements de propergol 1209, 1210 et 1211, de compositions identiques de préférence, séparés par des cloisons souples constituées chacune d'une partie tubulaire 1205 ou 1207 et une partie annulaire 1206 et 1208, les deux cloisons souples étant configurées et agencées l'une par rapport à l'autre, de façon à inhiber la combustion d'un chargement alors qu'un autre chargement est déjà en combustion. Le générateur de poussée comporte également quatre allumeurs, 1201, 1202, 1203 et 1204, permettant d'initier séparément et suivant un mode de combustion donné: la combustion du premier chargement 1209 par la surface coaxiale S1, comme illustré par la figure 6, la combustion du deuxième chargement 1210 par la surface annulaire S2, comme illustré par la figure 10, et la combustion du troisième chargement 12011 soit par la surface coaxiale S4, comme illustré par la figure 6 également, soit par la surface annulaire S5, comme illustré par la figure 10 également.

Dans cet exemple d'application, le générateur de poussée apparait configuré pour pouvoir adopter deux régimes de poussée distincts, chacun présentant trois séquences de poussée:
- un premier régime de poussée, illustrée par la figure 13, pour lequel on actionne successivement les allumeurs 1201, 1202 et 1203, ce régime de poussée permettant d'obtenir une première poussée 1301 de durée t₁ d'intensité F1 suivie après un intervalle de temps ΔT₁ par une seconde poussée 1302 de durée t₃-t₂ sensiblement supérieure à t₁ et d'intensité F2 sensiblement plus faible que F1, puis après un intervalle de temps ΔT₂ par une troisième poussée 1303 dont la durée t₅-t₄ est également sensiblement supérieure à t₁ et dont l'intensité F3 est également sensiblement plus faible que F1.
- un second régime de poussée, illustrée par la figure 14, pour lequel on actionne successivement les allumeurs 1201, 1202 et 1204, ce régime de poussée permettant d'obtenir comme précédemment une première poussée 1401 de durée t₁ d'intensité F1, suivie après un intervalle de temps ΔT₁ par une seconde poussée 1402 de durée t₃-t₂ sensiblement supérieure à t₁ et d'intensité F2 sensiblement plus faible que F1, puis après un intervalle de temps ΔT₂ par une troisième poussée 1403 dont la durée t₅-t₄ est du même ordre que t₁ et dont l'intensité F3 est comparable, bien qu'inférieure, à l'intensité F1 de la première poussée.

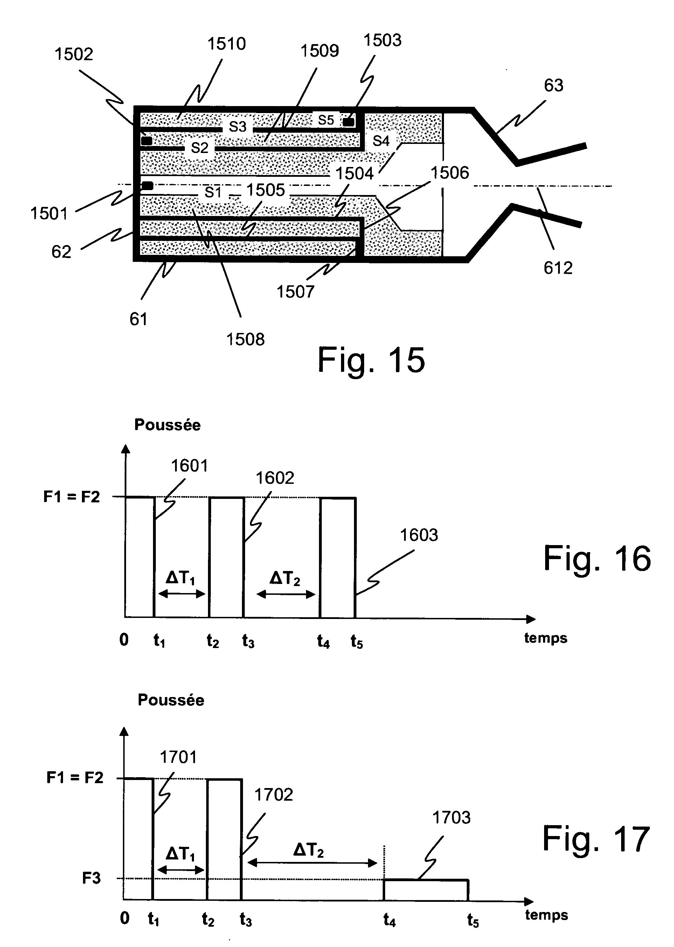

Les figures 15 à 17 illustrent un autre exemple d'application correspondant à une structure directement dérivée de la structure générale du générateur de poussée bipulses selon l'invention décrite précédemment. Dans cette application le générateur de poussée est également un générateur tripulses dont la structure peut aisément être généralisée pour réaliser un générateur de poussée multipulses. Il constitue une alternative de réalisation du générateur de poussée tripulses décrit précédemment.

Dans cet exemple de réalisation le générateur de poussée comporte trois chargements de propergol 1508, 1509 et 1510, de compositions identiques de préférence, séparés les uns des autres par des cloisons souples constituées chacune d'une partie tubulaire 1504 ou 1505 et une partie annulaire 1506 et 1207, les deux cloisons souples étant configurées et agencées l'une par rapport à l'autre, comme l'illustre la figure 15, de façon à inhiber la combustion d'un chargement alors qu'un autre chargement est déjà en combustion. A cet effet la première cloison souple 1504-1506 peut par exemple présenter un partie annulaire 1506 qui recouvre la partie annulaire 1507 de la seconde cloison souple 1505-1507.

Le générateur de poussée comporte trois allumeurs, 1501, 1502 et 1503, configurés et agencés de façon à permettre d'initier séparément la combustion de chacun des chargements suivant le mode de combustion souhaité: la combustion du premier chargement 1508 par la surface coaxiale S1, comme illustré par la figure 6, la combustion du deuxième chargement 1509 par la surface annulaire S2, comme illustré par la figure 7 et la combustion du troisième chargement 12011 soit par la surface coaxiale S3, comme illustré par la figure 7 également, soit par la surface annulaire S4, comme illustré par la figure 10; la seconde cloison souple 1505-1507 étant elle-même par ailleurs configurées de façon à favoriser la combustion du troisième chargement soit par la surface S3, soit par la surface S4.

Dans cet exemple d'application, le générateur de poussée présenté peut être configuré pour adopter l'un ou l'autre des deux régimes de poussée suivants, chacun présentant trois séquences de poussée:
- un premier régime de poussée, illustrée par la figure 16, pour lequel on actionne successivement les allumeurs 1501, 1502 et 1503, ce régime de poussée permettant d'obtenir une première poussée 1601 de durée t₁ d'intensité F1 suivie, après un intervalle de temps ΔT, par une seconde poussée 1602 de durée t₃-t₂, et, après un intervalle de temps ΔT₂, par une troisième poussée 1603 de durée t₅-t₄; les durées t₃-t₂ et t₅-t₄, étant du même ordre que t₁, la deuxième et la troisième poussée présentant une intensité F2 comparable, à l'intensité F1 de la première poussée 1601.
- un second régime de poussée, illustrée par la figure 17, pour lequel on actionne successivement les allumeurs 1501, 1502 et 1503, ce régime de poussée permettant d'obtenir comme précédemment une première poussée 1701 de durée t₁ d'intensité F1, suivie après un intervalle de temps ΔT₁ par une seconde poussée 1702 de durée t₃-t₂ du même ordre que t₁ et dont l'intensité F2 est comparable, à l'intensité F1 de la première poussée , puis après un intervalle de temps ΔT₂ par une troisième poussée 1703 dont la durée t₅-t₄ est sensiblement supérieure à t₁ et d'intensité F3 sensiblement plus faible que F1, l'obtention des caractéristiques de cette dernière poussée étant obtenu par une régression frontale et non radiale de la surface de combustion.

## Revendications

1. Générateur de poussée à propergol solide pour produire un régime de poussée comportant deux impulsions de poussée espacées par un intervalle de temps ΔT, comprenant :
- une structure rigide comportant un corps de propulseur formé d'une paroi latérale (61), d'une extrémité fermée (62) et d'une extrémité libre terminée typiquement par une tuyère (63);
- deux chargements (66, 67) de propergol solide coulés successivement dans le corps de propulseur et moulés de façon à former deux éléments tubulaires coaxiaux emboités, séparés par une cloison souple (64, 65) en matériau inhibiteur de combustion , et délimitant respectivement un premier canal central (611) et un second canal central (71);
- un premier (68) et un second (69) éléments initiateurs de combustion, capables d'allumer successivement, sur commande, le premier (66) puis le second (67) chargement;
**caractérisé en ce que** :
- le premier élément initiateur de combustion (68) est agencé au contact du premier chargement de façon à initier une combustion de ce premier chargement par une surface S1 délimitant le premier canal central (611),
- le second élément initiateur de combustion (69) est agencé au contact du second chargement (67) et de façon à initier une combustion de ce second chargement par une surface S2 délimitant le second canal central (71) formé après combustion du premier chargement (66); le second élément initiateur de combustion (69) étant positionné derrière la cloison souple (64, 65) de façon à être en contact avec le second chargement (67),
- la cloison souple (64, 65) épouse la forme de la surface de contact entre le second chargement (67) et le premier chargement (66), et adhère au moins au second chargement (67); la cloison souple (64, 65) étant configurée de sorte qu'une élévation de pression générée par combustion du second chargement (67) initiée par la surface S2 au moyen du second élément initiateur de combustion (69) produise un décollement d'une portion de la cloison souple (64) en regard du second canal central (71) et un déchirement de cette cloison qui libère les gaz de combustion dans le second canal central (71).

2. Générateur de poussée selon la revendication 1, **caractérisé en ce que** le premier chargement présentant un épaulement qui entre en contact avec l'extrémité du second chargement, la cloison souple (64-65) présente une portion tubulaire (64) délimitant le second canal central (711) et une portion annulaire (65) correspondant à l'extrémité du second chargement en contact avec le premier chargement, la largeur de l'anneau étant égale à l'épaisseur du second chargement, le second élément initiateur de combustion étant agencé au contact du second chargement (67) de façon à initier une combustion de ce second chargement par la surface S2 délimitant le second canal central (71) formé après combustion du premier chargement (66), la membrane constituant la cloison souple (64-65) étant configurée de telle façon que la pression des gaz de combustion formé par l'initiation de la combustion du second chargement (67) produise le décollement de portion de sa portion tubulaire (64) et un déchirement de cette cloison au niveau de cette portion de façon à libérer les gaz de combustion dans le canal central, la portion annulaire (65) restée en place inhibant la combustion du second chargement par la surface S3 correspondant à cette portion.

3. Générateur de poussée selon l'une quelconque des revendications 1 ou 2, **caractérisé en ce que** le corps de propulseur (61-62) est réalisé en matériau composite, en matériau hybride, ou en métal.

4. Générateur de poussée selon l'une quelconque des revendications précédentes, **caractérisé en ce que** la membrane formant une cloison souple (64-65) est en matériau élastomère renforcé.

5. Générateur de poussée selon la revendication 4, **caractérisé en ce que** la membrane formant la cloison souple (64-65) est en EPDM (éthylène-propylène-diène monomère).

6. Générateur de poussée selon la revendication 4, **caractérisé en ce que** la membrane formant la cloison souple (64-65) est en Silicone.

7. Générateur de poussée selon la revendication 4, **caractérisé en ce que** la membrane formant la cloison souple (64-65) est en Polychloroprène.

8. Générateur de poussée selon l'une quelconque des revendications précédentes, **caractérisé en ce que** le premier (66) et le second chargement (67) sont constitués de propergol composite.

9. Générateur de poussée selon la revendication 8, **caractérisé en ce que** le premier (66) et le second chargement (67) sont constitués de propergol de type XLDB.

10. Générateur de poussée selon l'une quelconque des revendications 2 à 9, **caractérisé en ce qu'**il comporte en outre un troisième initiateur de combustion configuré pour allumer, sur commande, le second chargement (67) et agencé au contact de ce second chargement de façon à initier sa combustion par la surface S3 correspondant à la portion annulaire (65) de la cloison souple (64-65), la cloison souple étant configurée de telle façon que la pression des gaz de combustion formé par l'initiation de la combustion du second chargement (67) par le troisième initiateur de combustion produise le décollement de portion de sa portion annulaire (65) et un déchirement de la cloison au niveau de cette portion de façon à libérer les gaz de combustion, la portion tubulaire (64) restée en place inhibant la combustion du second chargement par la surface S2 correspondant à cette portion.

11. Générateur de poussée selon la revendication 10, **caractérisé en ce qu'**il comporte en outre un troisième chargement placé dans le prolongement du second chargement et un quatrième initiateur de combustion (1203) configuré pour allumer, sur commande, le troisième chargement (1211), ce dernier étant isolé du premier chargement (1209) par un seconde cloison souple (1207-1208) de forme similaire à la première cloison souple (1205-1206) solidaire de celle-ci, le quatrième initiateur de combustion (1203) étant agencé au contact de ce troisième chargement (1211) de façon à initier sa combustion par sa surface annulaire, la cloison souple étant configurée de telle façon que la pression des gaz de combustion formés par l'initiation de la combustion du troisième chargement (1211) par le quatrième initiateur de combustion (1203) produise le décollement de sa portion annulaire (1208) et un déchirement de la cloison au niveau de cette portion de façon à libérer les gaz de combustion, la portion tubulaire (1207) restée en place inhibant la combustion du troisième chargement (1211) par la surface S3 correspondant à cette portion.

12. Générateur de poussée selon l'une quelconque des revendications 2 à 9, **caractérisé en ce qu'**il comporte en outre un troisième chargement agencé dans le corps de propulseur de façon à ce que les trois chargements forment trois éléments tubulaires coaxiaux emboités, séparés les uns des autres par deux membranes en matériau inhibiteur de combustion formant deux cloisons souples (64-65) délimitant un premier canal central (661) un second canal central (71) et un troisième canal central, ainsi qu'un troisième initiateur de combustion (1203) configuré pour allumer, sur commande, le troisième chargement (1211), le troisième initiateur de combustion (1203) étant agencé au contact de ce troisième chargement (1211) de façon à initier sa combustion soit par sa surface annulaire S5, soit par sa surface tubulaire S3

13. procédé pour réaliser un générateur de poussée selon l'une quelconque des revendications 1 à 10, **caractérisé en ce qu'**il comporte:
- une opération préliminaire consistant à préparer de la structure interne du corps de propulseur en déposant des matériaux d'aménagement intérieur (M.A.I.) nécessaires à la mise en place d'un chargement moulé et au collage de ce chargement;
- une première opération consistant à couler dans le corps de propulseur, équipé d'un premier noyau de moulage, le propergol formant le second chargement (67), à réaliser la cuisson du propergol et à procéder à l'extraction du premier noyau;
- une deuxième opération consistant à mettre en place sur le propergol constituant le second chargement (67) une barrière élastomérique formant une paroi souple (64-65), préalablement préparée;
- une troisième opération consistant à couler dans le corps de propulseur, équipé d'un second noyau de moulage, le propergol formant le premier chargement (67) à réaliser la cuisson du propergol et à procéder à l'extraction du second noyau.

## Patentansprüche

1. Festtreibstoff-Schubgenerator zum Erzeugen eines Schubbetriebs, der zwei durch ein Zeitintervall ΔT voneinander getrennte Schubimpulse umfasst, wobei der Schubgenerator Folgendes umfasst:
- eine starre Struktur, die einen Triebwerkskörper umfasst, gebildet von einer Seitenwand (61), einem geschlossenen Ende (62) und einem freien Ende, das typischerweise von einer Düse (63) abgeschlossen wird;
- zwei Festtreibstoffladungen (66, 67), die nacheinander in den Triebwerkskörper gegossen und so geformt werden, dass zwei eingehauste koaxiale tubuläre Elemente entstehen, getrennt durch eine flexible Trennwand (64, 65) aus einem Verbrennungsinhibitionsmaterial, die jeweils einen ersten zentralen Kanal (611) und einen zweiten zentralen Kanal (71) begrenzen;
- ein erstes (68) und ein zweites (69) Verbrennungsinitiatorelement, die nacheinander auf Befehl die erste (66) und dann die zweite (67) Ladung zünden können, **dadurch gekennzeichnet, dass**:
- das erste Verbrennungsinitiatorelement (68) in Kontakt mit der ersten Ladung angeordnet ist, um die Verbrennung dieser ersten Ladung durch eine den ersten zentralen Kanal (611) begrenzende Fläche S1 einzuleiten;
- das zweite Verbrennungsinitiatorelement (69) in Kontakt mit der zweiten Ladung (67) angeordnet ist, um die Verbrennung dieser zweiten Ladung durch eine Fläche S2 einzuleiten, die den zweiten zentralen Kanal (71) begrenzt, der nach dem Verbrennen der ersten Ladung (66) gebildet wird; wobei das zweite Verbrennungsinitiatorelement (69) hinter der flexiblen Trennwand (64, 65) so positioniert ist, dass es mit der zweiten Ladung (67) in Kontakt ist;
- die flexible Partition (64, 65) sich der Form der Kontaktfläche zwischen der zweiten Ladung (67) und der ersten Ladung (66) anpasst und wenigstens an der zweiten Ladung (67) haftet; wobei die flexible Trennwand (64, 65) so konfiguriert ist, dass ein Druckanstieg, erzeugt durch die vom zweiten Verbrennungsinitiatorelement (69) durch die Fläche S2 eingeleitete Verbrennung der zweiten Ladung (67), bewirkt, dass sich ein Teil der flexiblen Trennwand (64) gegenüber dem zweiten zentralen Kanal (71) ablöst und die Trennwand bricht, so dass Verbrennungsgase im zweiten zentralen Kanal (71) freigesetzt werden.

2. Schubgenerator nach Anspruch 1, **dadurch gekennzeichnet, dass** die flexible Trennwand (64-65), da die erste Ladung eine Schulter hat, die mit dem Ende der zweiten Ladung in Kontakt kommt, einen den zweiten zentralen Kanal (711) begrenzenden tubulären Abschnitt (64) und einen ringförmigen Abschnitt (65) hat, der dem Ende der zweiten Ladung in Kontakt mit der ersten Ladung entspricht, wobei die Breite des Rings gleich der Dicke der zweiten Ladung ist, wobei das zweite Verbrennungsinitiatorelement in Kontakt mit der zweiten Ladung (67) angeordnet ist, um die Verbrennung der zweiten Ladung durch die Fläche S2 einzuleiten, die den nach der Verbrennung der ersten Ladung (66) gebildeten zweiten zentralen Kanal (71) begrenzt, wobei die die flexible Trennwand (64-65) bildende Membran so konfiguriert ist, dass der durch die Einleitung der Verbrennung der zweiten Ladung (67) gebildete Druck der Verbrennungsgase bewirkt, dass sich ein Teil ihres tubulären Abschnitts (64) ablöst und die Trennwand an diesem Teil bricht, um die Verbrennungsgase in dem zentralen Kanal freizusetzen, wobei der ringförmige Abschnitt (65) an seinem Ort bleibt und die Verbrennung der zweiten Ladung durch die Fläche S3 hemmt, die diesem Abschnitt entspricht.

3. Schubgenerator nach Anspruch 1 oder 2, **dadurch gekennzeichnet, dass** der Triebwerkskörper (61-62) aus einem Verbundmaterial, einem Hybridmaterial oder einem Metall gebildet ist.

4. Schubgenerator nach einem der vorherigen Ansprüche, **dadurch gekennzeichnet, dass** die eine flexible Trennwand (64-65) bildende Membran ein verstärktes Elastomermaterial ist.

5. Schubgenerator nach Anspruch 4, **dadurch gekennzeichnet, dass** die die flexible Trennwand (64-65) bildende Membran aus EPDM (Ethylen-Propylen-Dien-Monomer) besteht.

6. Schubgenerator nach Anspruch 4, **dadurch gekennzeichnet, dass** die die flexible Trennwand (64-65) bildende Membran aus Silikon besteht.

7. Schubgenerator nach Anspruch 4, **dadurch gekennzeichnet, dass** die die flexible Trennwand (64-65) bildende Membran aus Polychloropren besteht.

8. Schubgenerator nach einem der vorherigen Ansprüche, **dadurch gekennzeichnet, dass** die erste (66) und die zweite (67) Ladung aus Verbundtreibstoff gebildet sind.

9. Schubgenerator nach Anspruch 8, **dadurch gekennzeichnet, dass** die erste (66) und die zweite (67) Ladung aus einem Treibstoff des XLDB-Typs gebildet sind.

10. Schubgenerator nach einem der Ansprüche 2 bis 9, **dadurch gekennzeichnet, dass** er ferner einen dritten Verbrennungsinitiator umfasst, der zum Zünden der zweiten Ladung (67) auf Befehl konfiguriert und in Kontakt mit der zweiten Ladung angeordnet ist, um seine Verbrennung durch die Fläche S3 einzuleiten, die dem ringförmigen Abschnitt (65) der flexiblen Trennwand (64-65) entspricht, wobei die flexible Trennwand so konfiguriert ist, dass der Druck der Verbrennungsgase, gebildet durch die Einleitung der Verbrennung der zweiten Ladung (67) durch den dritten Verbrennungsinitiator, bewirkt, dass sich ein Teil seines ringförmigen Abschnitts (65) ablöst und die Trennwand an diesem Teil bricht, um die Verbrennungsgase freizusetzen, wobei der tubuläre Abschnitt (64) an seinem Ort bleibt und die Verbrennung der zweiten Ladung durch die Fläche S2 hemmt, die dem Teil entspricht.

11. Schubgenerator nach Anspruch 10, **dadurch gekennzeichnet, dass** er ferner eine in der Verlängerung der zweiten Ladung platziert dritte Ladung und einen vierten Verbrennungsinitiator (1203) umfasst, der zum Zünden der dritten Ladung (1211) auf Befehl konfiguriert ist, wobei Letztere von der ersten Ladung (1209) durch eine zweite flexible Trennwand (1207-1208) mit einer ähnlichen Form wie die erste flexible Trennwand (1205-1206) und einstückig damit isoliert ist, wobei der vierte Verbrennungsinitiator (1203) in Kontakt mit der dritten Ladung (1211) angeordnet ist, um seine Verbrennung durch seine ringförmige Fläche einzuleiten, wobei die flexible Trennwand so konfiguriert ist, dass der Druck der Verbrennungsgase, gebildet durch die Einleitung der Verbrennung der dritten Ladung (1211) durch den vierten Verbrennungsinitiator (1203), bewirkt, dass sich sein ringföimiger Abschnitt (1208) ablöst und die Trennwand an diesem Abschnitt bricht, um die Verbrennungsgase freizusetzen, wobei der tubuläre Abschnitt (1207) an seinem Ort bleibt und die Verbrennung der dritten Ladung (1211) durch die Fläche S3 hemmt, die dem Abschnitt entspricht.

12. Schubgenerator nach einem der Ansprüche 2 bis 9, **dadurch gekennzeichnet, dass** er ferner eine dritte Ladung umfasst, die innerhalb des Tuebwerksköipers so angeordnet ist, dass die drei Ladungen drei eingehauste koaxiale tubuläre Elemente bilden, voneinander getrennt durch zwei Membranen aus einem Verbrennungsinhibitionsmaterial, die zwei flexible Trennwände (64-65) bilden, die einen ersten zentralen Kanal (661), einen zweiten zentralen Kanal (71) und einen dritten zentralen Kanal begrenzen, sowie einen dritten Verbrennungsinitiator (1203), konfiguriert zum Zünden der dritten Ladung (1211) auf Befehl, wobei der dritte Verbrennungsinitiator (1203) in Kontakt mit der dritten Ladung (1211) angeordnet ist, um seine Verbrennung entweder durch seine ringförmige Fläche S5 oder durch seine tubuläre Fläche S3 einzuleiten.

13. Verfahren zum Erzeugen eines Schubgenerators nach einem der Ansprüche 1 bis 10, **dadurch gekennzeichnet, dass** es Folgendes beinhaltet:
- einen einleitenden Vorgang bestehend im Herstellen der internen Struktur des Triebwerkskörpers durch Absetzen von Innenausstattungsmateualien, die zum Installieren einer geformten Ladung und zum Aufkleben der Ladung benötigt werden;
- einen ersten Vorgang bestehend im Gießen des die zweite Ladung (67) bildenden Treibstoffs in den mit einem ersten Formkern ausgestatteten Triebwerkskörper, Härten des Treibstoffs und Herausnehmen des ersten Kerns;
- einen zweiten Vorgang bestehend im Installieren einer eine vorgefertigte flexible Wand (64-65) bildenden elastomeren Barriere auf dem die zweite Ladung (67) bildenden Treibstoff;
- einen dritten Vorgang bestehend im Gießen des die erste Ladung (67) bildenden Treibstoffs in den mit einem zweiten Formkern ausgestatteten Triebwerkskörper, Härten des Treibstoffs und Herausnehmen des zweiten Kerns.

## Claims

1. A solid propellant boost generator for generating a boost regime comprising two boost pulses separated by a time interval ΔT, said boost generator comprising:
- a rigid structure comprising a booster body formed by a side wall (61), a closed end (62) and a free end typically terminated by a nozzle (63);
- two solid propellant charges (66, 67) successively poured into said booster body and moulded so as to form two nested coaxial tubular elements, separated by a flexible partition (64, 65) made of a combustion inhibitor material and respectively delimiting a first central channel (611) and a second central channel (71);
- a first (68) and a second (69) combustion initiator element capable of successively igniting said first (66) and then said second (67) charge on command, **characterised in that**:
- said first combustion initiator element (68) is arranged in contact with said first charge so as to initiate the combustion of said first charge via a surface S 1 delimiting said first central channel (611);
- said second combustion initiator element (69) is arranged in contact with said second charge (67) so as to initiate the combustion of said second charge via a surface S2 delimiting said second central channel (71) formed after the combustion of said first charge (66); said second combustion initiator element (69) being positioned behind said flexible partition (64, 65) so as to be in contact with said second charge (67);
- said flexible partition (64, 65) conforms to the shape of the contact surface between said second charge (67) and said first charge (66) and adheres at least to said second charge (67); said flexible partition (64, 65) being configured so that a pressure increase generated by the combustion of said second charge (67) initiated via said surface S2 by means of said second combustion initiator element (69) causes part of said flexible partition (64) facing said second central channel (71) to detach and said partition to fracture, which releases the combustion gases inside said second central channel (71).

2. The boost generator according to claim 1, **characterised in that**, with said first charge having a shoulder that comes into contact with the end of said second charge, said flexible partition (64-65) has a tubular portion (64) delimiting said second central channel (711) and an annular portion (65) corresponding to the end of said second charge in contact with said first charge, the width of the ring being equal to the thickness of said second charge, said second combustion initiator element being arranged in contact with said second charge (67) so as to initiate the combustion of said second charge via said surface S2 delimiting said second central channel (71) formed after the combustion of said first charge (66), the membrane forming said flexible partition (64-65) being configured so that the pressure of the combustion gases formed by the initiation of the combustion of said second charge (67) causes part of its tubular portion (64) to detach and said partition to fracture at this part so as to release the combustion gases inside said central channel, with said annular portion (65) remaining in place, inhibiting the combustion of said second charge via the surface S3 that corresponds to said portion.

3. The boost generator according to claim 1 or 2, **characterised in that** said booster body (61-62) is made of a composite material, a hybrid material or a metal.

4. The boost generator according to any one of the preceding claims, **characterised in that** said membrane forming a flexible partition (64-65) is a reinforced elastomer material.

5. The boost generator according to claim 4, **characterised in that** said membrane forming said flexible partition (64-65) is made of EPDM (ethylene-propylene-diene monomer).

6. The boost generator according to claim 4, **characterised in that** said membrane forming said flexible partition (64-65) is made of silicone.

7. The boost generator according to claim 4, **characterised in that** said membrane forming said flexible partition (64-65) is made of polychloroprene.

8. The boost generator according to any one of the preceding claims, **characterised in that** said first (66) and said second (67) charges are made up of a composite propellant.

9. The boost generator according to claim 8, **characterised in that** said first (66) and said second (67) charges are made up of an XLDB type propellant.

10. The boost generator according to any one of claims 2 to 9, **characterised in that** it further comprises a third combustion initiator configured to ignite said second charge (67) on command and arranged in contact with said second charge so as to initiate its combustion via said surface S3 that corresponds to said annular portion (65) of said flexible partition (64-65), said flexible partition being configured so that the pressure of the combustion gases formed by the initiation of the combustion of said second charge (67) by said third combustion initiator causes part of its annular portion (65) to detach and said partition to fracture at said part so as to release the combustion gases, with said tubular portion (64) remaining in place, inhibiting the combustion of said second charge via said surface S2 that corresponds to said portion.

11. The boost generator according to claim 10, **characterised in that** it further comprises a third charge placed in the extension of said second charge and a fourth combustion initiator (1203) configured to ignite said third charge (1211) on command, this last charge being isolated from the first charge (1209) by a second flexible partition (1207-1208) of similar shape to the first flexible partition (1205-1206) integral therewith, said fourth combustion initiator (1203) being arranged in contact with said third charge (1211) so as to initiate its combustion through its annular surface, said flexible partition being configured so that the pressure of the combustion gases formed by the initiation of the combustion of said third charge (1211) by said fourth combustion initiator (1203) causes its annular portion (1208) to detach and said partition to fracture at said portion so as to release the combustion gases, with the tubular portion (1207) remaining in place, inhibiting the combustion of said third charge (1211) via said surface S3 that corresponds to said portion.

12. The boost generator according to any one of claims 2 to 9, **characterised in that** it further comprises a third charge arranged inside said booster body so that said three charges form three nested coaxial tubular elements, separated from each other by two membranes made of a combustion inhibitor material forming two flexible partitions (64-65) delimiting a first central channel (661), a second central channel (71) and a third central channel, as well as a third combustion initiator (1203) configured to ignite said third charge (1211) on command, said third combustion initiator (1203) being arranged in contact with said third charge (1211) so as to initiate its combustion either through its annular surface S5 or through its tubular surface S3.

13. A method for producing a boost generator according to any one of claims 1 to 10, **characterised in that** it comprises:
- a preliminary operation involving preparing the internal structure of said booster body by depositing internal layout materials that are needed to install a moulded charge and to adhere said charge;
- a first operation involving pouring the propellant forming said second charge (67) into said booster body, which is fitted with a first moulding core, curing said propellant and beginning the extraction of said first core;
- a second operation involving installing an elastomer barrier on the propellant forming said second charge (67), which barrier forms a pre-prepared flexible wall (64-65);
- a third operation involving pouring the propellant forming said first charge (67) into said booster body, which is fitted with a second moulding core, curing said propellant and beginning the extraction of said second core.
